# EUROPEAN PATENT APPLICATION

(11) **EP 3 467 997 A1**
(43) Date of publication of application: **10.04.2019**
(21) Application number: 17806874.8
(22) Date of filing: 17.03.2017
(51) Int. Cl.: H02J 50/60, H02J 50/12, H02J 50/10

(54) **WIRELESS POWER TRANSMISSION METHOD AND DEVICE THEREFOR**

(30) Priority: 31.05.2016 KR 20160067499
(71) Applicant: LG Innotek Co., Ltd., Seoul 04637 (KR)
(72) Inventor: JUNG, Woo Kil, Seoul 04637 (KR)
(74) Representative: DREISS Patentanwälte PartG mbB
(86) International application number: PCT/KR2017/002887
(87) International publication number: WO 2017/209381

(57) **Abstract**

The present invention relates to a wireless power transmission method and a device therefor. A wireless power transmission method in a wireless power transmission device for wirelessly transmitting power to a wireless power reception device according to an embodiment of the present invention, comprises the steps of: transmitting a first detecting signal; determining whether an object exists in a charge area, by measuring the amount of current change in the first detecting signal; transmitting a second detecting signal for identifying the wireless power reception device when the object exists as a result of the determination; and determining whether a foreign material exists on the basis of whether a feedback signal corresponding to the second detecting signal has been received, wherein when the foreign material is determined to exist, a predefined allowable value compared to the amount of current change in order to determine whether the object exists can be updated. Therefore, the present invention can provide a wireless power transmission device that can minimize heat generation and waste of power.

## Description

### [Technical Field]

Embodiments relate to a wireless power transmission technique, and more particularly, to a wireless power transmission method capable of minimizing heating and waste of power caused by foreign substances, and a device and system therefor.

### [Background Art]

Recently, with rapid development of information and communication technology, a ubiquitous society based on information and communication technology is being established.

In order for information communication devices to be connected anywhere and anytime, sensors with a built-in computer chip having a communication function should be installed in all facilities throughout society. Accordingly, power supply to these devices or sensors is becoming a new challenge. In addition, as the types of mobile devices such as Bluetooth handsets and iPods, as well as mobile phones, rapidly increase in number, charging the battery has required time and effort. As a way to address this issue, wireless power transmission technology has recently drawn attention.

Wireless power transmission (or wireless energy transfer) is a technology for wirelessly transmitting electric energy from a transmitter to a receiver using the induction principle of a magnetic field. In the 1800s, an electric motor or a transformer based on the electromagnetic induction principle began to be used. Thereafter, a method of transmitting electric energy by radiating a high-frequency wave, microwave, or an electromagnetic wave such as laser was tried. Electric toothbrushes and some electric shavers are charged through electromagnetic induction.

Wireless energy transmission schemes introduced up to now may be broadly classified into electromagnetic induction, electromagnetic resonance, and RF transmission using a short-wavelength radio frequency.

In the electromagnetic induction scheme, when two coils are arranged adjacent to each other and current is applied to one of the coils, a magnetic flux generated at this time generates electromotive force in the other coil. This technology is being rapidly commercialized mainly for small devices such as mobile phones. In the electromagnetic induction scheme, power of up to several hundred kilowatts (kW) may be transmitted with high efficiency, but the maximum transmission distance is less than or equal to 1 cm. As a result, the device should be generally arranged adjacent to the charger or the floor.

The electromagnetic resonance scheme uses an electric field or a magnetic field instead of using an electromagnetic wave or current. The electromagnetic resonance scheme is advantageous in that the scheme is safe to other electronic devices or the human body since it is hardly influenced by the electromagnetic wave. However, this scheme may be used only at a limited distance and in a limited space, and has somewhat low energy transfer efficiency.

The short-wavelength wireless power transmission scheme (simply, RF transmission scheme) takes advantage of the fact that energy can be transmitted and received directly in the form of radio waves. This technology is an RF power transmission scheme using a rectenna. A rectenna, which is a compound of antenna and rectifier, refers to a device that converts RF power directly into direct current (DC) power. That is, the RF method is a technology for converting AC radio waves into DC waves. Recently, with improvement in efficiency, commercialization of RF technology has been actively researched.

The wireless power transmission technology is applicable to various industries including IT, railroads, and home appliance industries as well as the mobile industry.

In recent years, researches on a method of detecting a foreign object in a wireless charging system have been actively conducted.

Generally, when there is a foreign object in a wireless charging area, an electromagnetic field is absorbed by the foreign object and heat is generated.

In a conventional method of controlling power according to detection of a foreign object in a wireless charging system, when a foreign object is detected, a power of the wireless power transmission device is cut off or power transmission is immediately interrupted.

However, in the conventional wireless power transmission method, when there is a foreign object in the charging prior to transition to the power transfer phase, heat generation due to the foreign object may not be blocked.

That is, when a foreign object is detected during power transmission, the conventional wireless power transmission method may prevent heat from damaging the device by interrupting power transmission or cutting off power immediately. However, it may not block heat generation when a foreign object is detected prior to initiation of power transmission, namely, in the standby state.

### [Disclosure]

### [Technical Problem]

Therefore, the present disclosure has been made in view of the above problems, and embodiments provide a wireless power transmission method capable of minimizing heat generation and waste of power caused by a foreign object, and a device therefor.

Embodiments provide a wireless power transmission method capable of adaptively controlling transmission of a ping signal according to whether or not a foreign object is detected, and a device therefor.

Embodiments provide a wireless power transmission method capable of adaptively controlling transmission of a beacon signal according to whether or not a foreign object is detected, and a device therefor.

The technical objects that can be achieved through the embodiments are not limited to what has been particularly described hereinabove and other technical objects not described herein will be more clearly understood by persons skilled in the art from the following detailed description.

### [Technical Solution]

Embodiments provide a wireless power transmission method and a device therefor.

In one embodiment, a method of wirelessly transmitting power by a wireless power transmission device configured to wirelessly transmit power to a wireless power reception device includes transmitting a first detection signal, measuring an amount of change in current of the first detection signal and determining whether an object is present in a charging area, transmitting a second detection signal for identifying the wireless power reception device when the object is present as a result of the determining, and determining whether a foreign object is present based on whether a feedback signal corresponding to the second detection signal is received, wherein, when it is determined that the foreign object is present, a predetermined allowable value to be compared with the amount of change in current may be updated in order to determine whether or not the object is present.

Herein, when it is determined that the foreign object is present, the transmission of the second detection signal may be stopped and the transmission of the first detection signal may be initiated.

In addition, with the foreign object being determined to be present, the second detection signal may be transmitted every time the number of consecutive transmissions of the first detection signal reaches a predetermined reference value.

Herein, when presence of the object is recognized before the number of consecutive transmissions of the first detection signal reaches the reference value, the second detection signal may be transmitted, wherein, when the feedback signal for the second detection signal is normally received and the wireless power reception device is identified, transmission of the power to the wireless power reception device may be initiated.

In addition, the reference value may be increased every time the number of consecutive transmissions of the first sense signal reaches the reference value.

In addition, the method may further include outputting a predetermined alarm signal when it is determined that the foreign object is present.

In an example, when a scheme for transmitting the power to the wireless power reception device is an electromagnetic resonance scheme, the feedback signal may be an advertisement signal defined in Alliance For Wireless Power (A4WP) standard.

In another example, when the scheme for transmitting the power to the wireless power reception device is an electromagnetic inductance scheme, the feedback signal may be a control signal strength packet defined in Wireless Power Consortium (WPC) standard.

When the number of consecutive transmissions of the second detection signal exceeds a predetermined reference value without the feedback signal received, it may be determined that the foreign object is present.

In addition, the reference value may be updated based on the amount of change in current at a time when it is determined that the object is present.

In an example, the first detection signal may be an analog ping signal and the second detection signal may be a digital ping signal.

In another example, the first detection signal may be a short beacon signal and the second detection signal may be a long beacon signal.

In another embodiment, there is provided a computer-readable recording medium having recorded thereon a program for executing any one of the above-described wireless power transmission methods.

In another embodiment, a wireless power transmission device for wirelessly transmitting power to a wireless power reception device includes a power transmission unit configured to transmit a first detection signal, an object detection unit configured to measure an amount of change in current of the first detection signal and determine whether an object is present in a charging area, a foreign object detection unit configured to determine, when the object is present, whether or not a foreign object is present based on whether a feedback signal corresponding to a second detection signal transmitted by the power transmission unit to identify the wireless power reception device is received, and an allowable value update unit configured to update, when it is determined that the foreign object is present, a predetermined allowable to be compared with the amount of change in current in order to determine whether the object is present.

When it is determined that the foreign object is present, the transmission of the second detection signal is stopped and the transmission of the first detection signal is initiated.

Herein, when it is determined that the foreign object is present, the transmission of the second detection signal may be stopped and the transmission of the first detection signal may be initiated.

In addition, with the foreign object being determined to be present, the second detection signal may be transmitted every time the number of consecutive transmissions of the first detection signal reaches a predetermined reference value.

Herein, when presence of the object is recognized before the number of consecutive transmissions of the first detection signal reaches the reference value, the second detection signal may be transmitted, wherein, when the feedback signal for the second detection signal is normally received and the wireless power reception device is identified, transmission of the power to the wireless power reception device may be initiated.

In addition, the reference value may be increased every time the number of consecutive transmissions of the first sense signal reaches the reference value.

The wireless power transmission device may further include a display unit configured to output a predetermined alarm signal when it is determined that the foreign object is present.

In an example, when a scheme for transmitting the power to the wireless power reception device is an electromagnetic resonance scheme, the feedback signal may be an advertisement signal defined in Alliance For Wireless Power (A4WP) standard.

In another example, when the scheme for transmitting the power to the wireless power reception device is an electromagnetic inductance scheme, the feedback signal may be a control signal strength packet defined in Wireless Power Consortium (WPC) standard.

When the number of consecutive transmissions of the second detection signal exceeds a predetermined reference value without the feedback signal received, the foreign object detection unit may determine that the foreign object is present

In addition, the allowable value update unit may update the reference value based on the amount of change in current at a time when it is determined that the object is present.

In an example, the first detection signal may be an analog ping signal and the second detection signal may be a digital ping signal.

In another example, the first detection signal may be a short beacon signal and the second detection signal may be a long beacon signal.

The power transmission unit may include a buck converter configured to convert DC power supplied from a power source into specific DC power, wherein the amount of change in power may be measured at an output end of the buck converter.

In another embodiment, there is provided a computer-readable recording medium having recorded thereon a program for executing any one of the above-described wireless power transmission methods.

The above-described aspects of the present disclosure are merely a part of preferred embodiments of the present disclosure. Those skilled in the art will derive and understand various embodiments reflecting the technical features of the present disclosure from the following detailed description of the present disclosure.

### [Advantageous Effects]

The method, device and system according to the embodiments have the following effects.

Embodiments provide a wireless power transmission method capable of minimizing heat generation and waste of power in a standby state, and a device therefor.

Embodiments provide a wireless power transmission method capable of preventing unnecessary waste of power and heat generation caused by a foreign object by adaptively controlling transmission of a ping signal according to whether or not a foreign object is detected, and a device therefor.

Embodiments provide a wireless power transmission method capable of preventing unnecessary waste of power and heat generation caused by a foreign object by adaptively controlling transmission of a beacon signal according to whether or not a foreign object is detected, and a device therefor.

It will be appreciated by those skilled in the art that that the effects that can be achieved through the embodiments of the present disclosure are not limited to those described above and other advantages of the present disclosure will be more clearly understood from the following detailed description.

### [Description of Drawings]

The accompanying drawings, which are included to provide a further understanding of the disclosure and are incorporated in and constitute a part of this application, illustrate embodiments of the disclosure and, together with the description, serve to explain the principles of the disclosure. It is to be understood, however, that the technical features of the present disclosure are not limited to the specific drawings, and the features disclosed in the drawings may be combined to constitute a new embodiment.
FIG. 1 is a block diagram illustrating a wireless charging system according to an embodiment.
FIG. 2 is a block diagram illustrating a wireless charging system according to another embodiment.
FIG. 3 is a diagram illustrating a wireless power receiver detection procedure in a wireless charging system according to an embodiment.
FIG. 4 is a state transition diagram illustrating a wireless power transmission procedure defined in the WPC standard.
FIG. 5 is a state transition diagram illustrating a wireless power transmission procedure defined in the PMA standard.
FIG. 6 is a state transition diagram of a wireless power receiver supporting an electromagnetic resonance scheme according to an embodiment.
FIG. 7 is a state transition diagram illustrating a state transition procedure in a wireless power transmitter supporting an electromagnetic resonance scheme according to an embodiment.
FIG. 8 is a diagram illustrating a conventional method of transmitting a detection signal.
FIG. 9 is a diagram illustrating a method of controlling transmission of a ping signal upon detection of a foreign object according to an embodiment.
FIG. 10 is a diagram illustrating a method of controlling transmission of a ping signal upon detection of a foreign object according to another embodiment.
FIG. 11 is a diagram illustrating a wireless power transmission method of a wireless power transmission device supporting an electromagnetic induction scheme according to an embodiment.
FIG. 12 is a diagram illustrating a method of controlling transmission of a beacon signal upon detection of a foreign object according to an embodiment.
FIG. 13 is a diagram for illustrating a wireless power transmission method of a wireless power transmission device supporting an electromagnetic resonance scheme according to an embodiment.
FIG. 14 is a flowchart illustrating a wireless power transmission method for a wireless power transmission device according to an embodiment.
FIG. 15 is a flowchart illustrating a wireless power transmission method for a wireless power transmission device according to another embodiment.
FIG. 16 is a block diagram of a wireless power transmission device according to an embodiment.

### [Best Mode]

A wireless power transmission method in a wireless power transmission device configured to wirelessly transmit power to a wireless power reception device according to an embodiment includes transmitting a first detection signal, measuring an amount of change in current with respect to the first detection signal and determining whether or not an object is present in a charging area, transmitting a second detection signal for identifying the wireless power reception device when the object is present as a result of the determining, and determining whether or not there is a foreign object based on whether or not a feedback signal corresponding to the second detection signal is received, wherein, when it is determined that there is the foreign object, a predetermined tolerance value to be compared with the amount of change in current may be updated to determine whether or not there is the object.

### [Mode for Invention]

Hereinafter, an apparatus and various methods to which embodiments of the present disclosure are applied will be described in detail with reference to the drawings. As used herein, the suffixes "module" and "unit" are added or used interchangeably to facilitate preparation of this specification and are not intended to suggest distinct meanings or functions.

In the description of the embodiments, it is to be understood that, when an element is described as being "on"/"over" or "beneath"/"under" another element, the two elements may directly contact each other or may be arranged with one or more intervening elements present therebetween. Also, the terms "on"/"over" or "beneath"/"under" may refer to not only an upward direction but also a downward direction with respect to one element.

For simplicity, in the description of the embodiments, "wireless power transmitter," "wireless power transmission device," "transmission end," "transmitter," "transmission device," "transmission side," "wireless power transfer device," "wireless power transferer," and the like will be used interchangeably to refer to a device equipped with a function of transmitting wireless power in a wireless charging system. In addition, "wireless power reception device," "wireless power receiver," "reception end," "reception side," "reception device," "receiver," and the like will be used interchangeably to refer to a device equipped with a function of receiving wireless power from a wireless power transmission device.

The transmitter according to the present disclosure may be configured as a pad type, a cradle type, an access point (AP) type, a small base station type, a stand type, a ceiling embedded type, a wall-mounted type, or the like. One transmitter may transmit power to a plurality of wireless power reception devices. To this end, the transmitter may include at least one wireless power transmission means. Here, the wireless power transmission means may employ various wireless power transmission standards which are based on the electromagnetic induction scheme for charging according to the electromagnetic induction principle meaning that a magnetic field is generated in a power transmission end coil and current is induced in a reception end coil by the magnetic field. Here, the wireless power transmission means may include wireless charging technology using electromagnetic induction schemes defined by the Wireless Power Consortium (WPC) and the Power Matters Alliance (PMA), which are wireless charging technology standard organizations.

In addition, a receiver according to an embodiment of the present disclosure may include at least one wireless power reception means, and may receive wireless power from two or more transmitters simultaneously. For example, the wireless power reception means may include wireless charging technologies of electromagnetic induction schemes defined by the Wireless Power Consortium (WPC) and the Power Matters Alliance (PMA), which are wireless charging technology standard organizations. As another example, the wireless power reception means may include an electromagnetic resonance wireless charging technique as defined by Alliance For Wireless Power (A4WP), which is a wireless charging technology standard organization. As still another example, the wireless power reception means may include a multi-mode charging technique defined in the Airfuel Alliance, which is a standard defined to adaptively receive power using one of both of the electromagnetic induction scheme and the electromagnetic resonance scheme.

The receiver according to the present disclosure may be employed in small electronic devices including a mobile phone, a smartphone, a laptop computer, a digital broadcasting terminal, a PDA (Personal Digital Assistant), a PMP (Portable Multimedia Player), a navigation device, an electric toothbrush, an electronic tag, a lighting device, a remote control, a fishing float, and wearable devices such as a smart watch. However, the embodiments are not limited thereto. The applications may include any devices which are equipped with a wireless power transmission means and have a rechargeable battery.

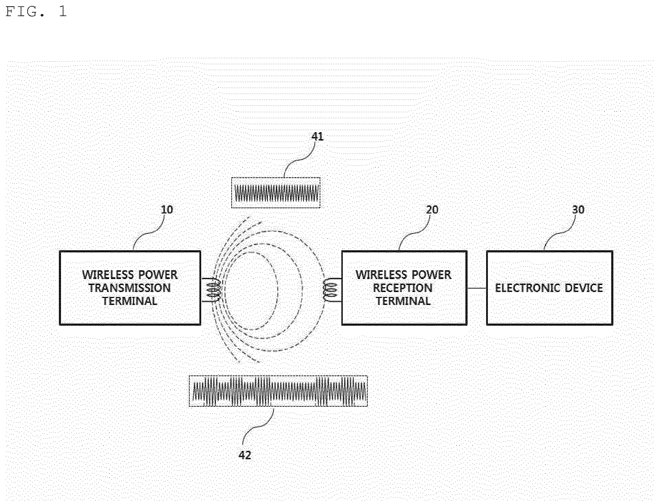

FIG. 1 is a block diagram illustrating a wireless charging system according to an embodiment.

Referring to FIG. 1, the wireless charging system may include a wireless power transmission end 10 configure to wirelessly transmit power, a wireless power reception end 20 configure to receive the transmitted power, and an electronic device 20 configured to be supplied with the received power.

In an example, the wireless power transmission end 10 and the wireless power reception end 20 may perform in-band communication, in which information is exchanged using the same frequency band as the operating frequency used for wireless power transmission. In another example, the wireless power transmission end 10 and the wireless power reception end 20 may perform out-of-band communication, in which information is exchanged using a separate frequency band different from the operating frequency used for wireless power transmission.

For example, the information exchanged between the wireless power transmission end 10 and the wireless power reception end 20 may include control information as well as state information about the terminals. Here, the state information and the control information exchanged between the transmission end and the reception end will be clarified through the embodiments which will be described later.

The in-band communication and the out-of-band communication may provide bidirectional communication, but embodiments are not limited thereto. In another embodiment, the in-band communication and the out-of-band communication may provide unidirectional communication or half-duplex communication.

For example, the unidirectional communication may be used for the wireless power reception end 20 to transmit information only to the wireless power transmission end 10, but embodiments are not limited thereto. The unidirectional communication may be used for the wireless power transmission end 10 to transmit information to the wireless power reception end 20.

In the half duplex communication, bidirectional communication may be performed between the wireless power reception end 20 and the wireless power transmission end 10, but only one device may be allowed to transmit information at a certain point of time.

The wireless power reception end 20 according to an embodiment may acquire various kinds of state information about an electronic device 30. For example, the state information about the electronic device 30 may include current reception sensitivity information, current power usage information, information for identifying an application being executed, CPU usage information, battery charging state information, and battery output voltage/current information, but embodiments are not limited thereto. The state information may include any information that may be acquired from the electronic device 30 and available for wireless power control. The wireless power reception end 20 may transmit the various kinds of acquired state information about the electronic device 30 to the wireless power transmission end 10 through in-band communication or out-of-band communication.

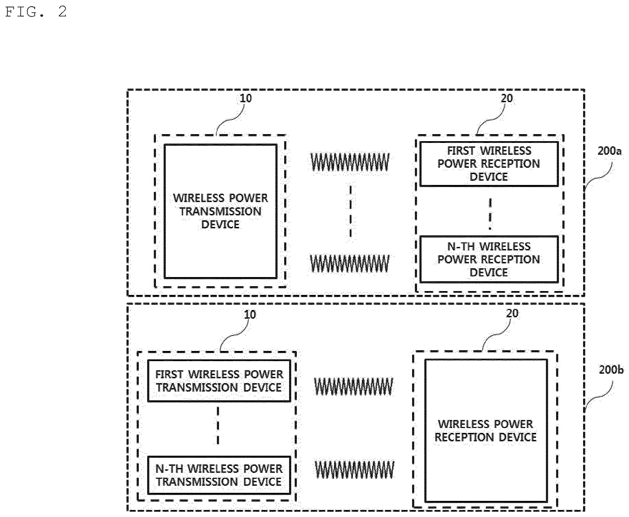

FIG. 2 is a block diagram illustrating a wireless charging system according to another embodiment.

For example, as indicated by reference numeral 200a, the wireless power reception end 20 may include a plurality of wireless power receiving devices, and a plurality of wireless power reception devices may be connected to one wireless power transmission end 10 to perform wireless charging. In this operation, the wireless power transmission end 10 may distribute and transmit power to a plurality of wireless power reception devices in a time division manner, but embodiments are not limited thereto. In another example, the wireless power transmission end 10 distribute and transmit power to a plurality of wireless power reception devices using different frequency bands allocated to the respective wireless power reception devices.

Here, the number of wireless power reception devices connectable to one wireless power transmission device 10 may be adaptively determined based on at least one of a required power for each wireless power reception device, a battery charging state, a power consumption amount of the electronic device, and an available power of the wireless power transmission device.

As another example, as indicated by reference numeral 200b, the wireless power transmission end 10 may include a plurality of wireless power transmission devices. In this case, the wireless power reception end 20 may be connected to a plurality of wireless power transmission devices simultaneously, and may receive power from the connected wireless power transmission devices simultaneously to perform charging. Here, the number of wireless power transmission devices connected to the wireless power reception end 20 may be adaptively determined by a required power of the wireless power reception end 20, a battery charging state, a power consumption amount of the electronic device, an available power of the wireless power transmission device, a reception sensitivity of a terminal on which the wireless power reception end 20 is mounted, and the like.

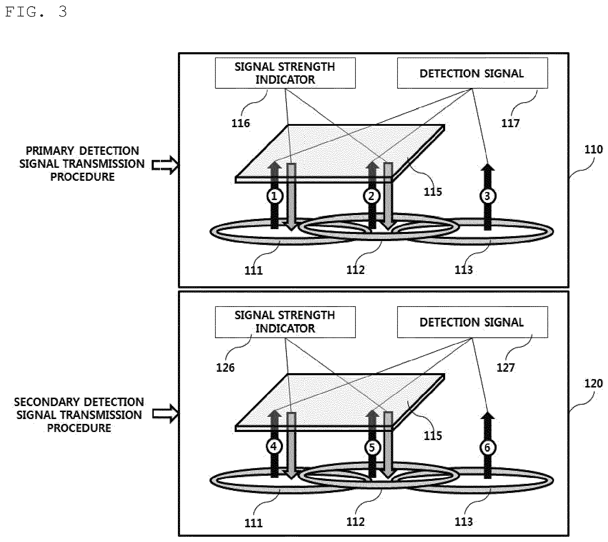

FIG. 3 is a diagram illustrating a procedure of transmitting a detection signal in a wireless charging system according to an embodiment.

As an example, the wireless power transmitter may be equipped with three transmission coils 111, 112, and 113. Each transmission coil may have a region partially overlapping the other transmission coils, and the wireless power transmitter sequentially transmits predetermined detection signals 117 and 127, for example, digital ping signals, for detecting presence of a wireless power receiver through the respective transmission coils in a predefined order.

As shown in FIG. 3, the wireless power transmitter may sequentially transmit detection signals 117 through a primary detection signal transmission procedure, which is indicated by reference numeral 110, and identify transmission coils 111 and 112 through which a signal strength indicator (or a signal strength packet) 116 is received from the wireless power receiver 115. Subsequently, the wireless power transmitter may sequentially transmit detection signals 127 through a secondary detection signal transmission procedure, which is indicated by reference numeral 120, identify a transmission coil exhibiting better power transmission efficiency (or charging efficiency), namely better alignment between the transmission coil and the reception coil, between the transmission coils 111 and 112 through which the signal strength indicator 126 is received, and perform a control operation to transmit power through the identified transmission coil, that is, to perform wireless charging.

The wireless power transmitter performs the detection signal transmission procedure twice as shown in FIG. 3 to more accurately identify a transmission coil that is better aligned with the reception coil of the wireless power receiver.

When the signal strength indicators 116 and 126 are received by the first transmission coil 111 and the second transmission coil 112 as indicated by reference numerals 110 and 120 of FIG. 3, the wireless power transmitter selects a transmission coil exhibiting the best alignment based on the signal strength indicator 126 received by each of the first transmission coil 111 and the second transmission coil 112 and performs wireless charging using the selected transmission coil.

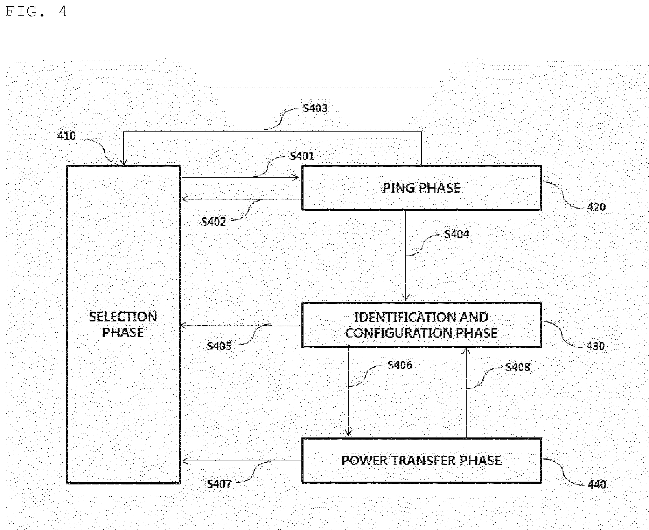

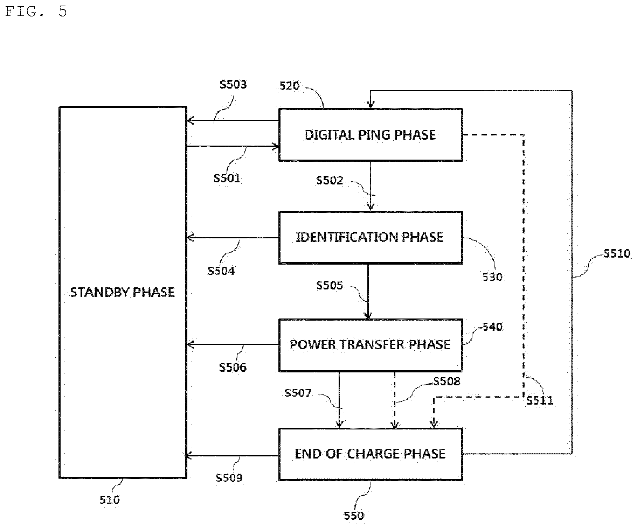

Hereinafter, a wireless power transmission procedure defined in the WPC standard and the PMA standard that support the electromagnetic induction scheme will be described in detail with reference to FIGs. 4 and 5.

FIG. 4 is a state transition diagram illustrating a wireless power transmission procedure defined in the WPC standard.

Referring to FIG. 4, power transmission from a transmitter to a receiver according to the WPC standard is broadly divided into a selection phase 410, a ping phase 420, an identification and configuration phase 430, and a power transfer phase 440.

The selection phase 410 may be a phase in which transition occurs when a specific error or a specific event is detected while power transmission begins or is maintained. Here, the specific error and the specific event will be clarified through the following description. Further, in the selection phase 410, the transmitter may monitor whether an object is present at the interface surface. When the transmitter detects an object being placed on the interface surface, it may transition to the ping phase 420 (S401). In the selection phase 410, the transmitter may transmit an analog ping signal of a very short pulse and detect whether an object is present in the active area of the interface surface based on the change in current of the transmission coils.

When the transmitter detects an object in the ping phase 420, it activates the receiver and transmits a digital ping to identify whether the receiver is a WPC standard-compatible receiver. If the transmitter does not receive a response signal (e.g., a signal strength indicator) for the digital ping from the receiver in the ping phase 420, it may transition back to the selection phase 410 (S402). In addition, if the transmitter receives, from the receiver, a signal indicating completion of power transmission, that is, a charge completion signal, the transmitter may transition to the selection phase 410 (S403).

Once the ping phase 420 is complete, the transmitter may transition to the identification and configuration phase 430 for identifying the receiver and collecting configuration and state information about the receiver (S404).

In the identification and configuration phase 430, the transmitter may transition to the selection phase 410 if an unexpected packet is received (unexpected packet), a desired packet is not received for a predefined time (timeout), there is an error in packet transmission (transmission error) or no power transfer contract is made (no power transfer contract) (S405).

Once identification and configuration of the receiver are complete, the transmitter may transition to the power transfer phase for transmitting wireless power (S406).

In the power transfer phase 440, the transmitter may transition to the selection phase 410 if an unexpected packet is received (unexpected packet), a desired packet is not received for a predefined time (timeout), a violation of a pre-established power transmission contract occurs (power transfer contract violation), and charging is complete (S407).

In addition, in the power transfer phase 440, if the power transfer contract needs to be reconfigured according to change in the state of the transmitter, the transmitter may transition to the identification and configuration phase 430 (S408) .

The above-mentioned power transmission contract may be set based on the state and characteristics information about the transmitter and the receiver. For example, the transmitter state information may include information on a maximum amount of transmittable power and information on a maximum number of acceptable receivers, and the receiver state information may include information on the required power.

FIG. 5 is a state transition diagram illustrating a wireless power transmission procedure defined in the PMA standard.

Referring to FIG. 5, power transmission from a transmitter to a receiver according to the PMA standard is broadly divided into a Standby phase 510, a Digital Ping phase 520, an Identification phase 530, a Power Transfer phase 540, and an End of Charge phase 550.

The Standby phase 510 may be a phase for performing transition when a specific error or a specific event is detected while a receiver identification procedure for power transmission is performed or power transmission is maintained. Here, the specific error and the specific event will be clarified through the following description. In addition, in the Standby phase 510, the transmitter may monitor whether an object is present on a charging surface. When the transmitter detects an object being placed on the charging surface or an RXID retry is in progress, it may transition to the Digital Ping phase 520 (S501) . Here, RXID is a unique identifier assigned to a PMA-compatible receiver. In the Standby phase 510, the transmitter may transmit an analog ping very short pulse, and detect, based on the change in current of the transmission coil, whether an object is present in the active area of the interface surface, for example, the charging bed.

Upon transitioning to the Digital Ping phase 520, the transmitter sends a digital ping signal to identify whether the detected object is a PMA-compatible receiver. When sufficient power is supplied to the reception terminal by the digital ping signal transmitted by the transmitter, the receiver may modulate the received digital ping signal according to the PMA communication protocol and transmit a predetermined response signal to the transmitter. Here, the response signal may include a signal strength packet indicating the strength of the power received by the receiver. When a valid response signal is received in the Digital Ping phase 520, the receiver may transition to the Identification phase 530 (S502).

If the response signal is not received or it is determined that the receiver is not a PMA-compatible receiver (i.e., Foreign Object Detection (FOD)) in the Digital Ping phase 520, the transmitter may transition to the Standby phase 510 (S503). As an example, a foreign object (FO) may be a metallic object including a coin and a key.

In the Identification phase 530, the transmitter may transition to the Standby phase 510 if the receiver identification procedure fails or needs to be re-performed and if the receiver identification procedure is not completed for a predefined time (S504).

When the transmitter succeeds in identifying the receiver, the transmitter may transition from the Identification phase 530 to the Power Transfer phase 540 and initiate charging (S505).

In the Power Transfer phase 540, the transmitter may transition to the Standby phase 510 when a desired signal is not received within a predetermined time (timeout), a foreign object (FO) is detected, or the voltage of the transmission coil exceeds a predefined reference value (S506).

In addition, in the Power Transfer phase 540, the transmitter may transition to the End of Charge phase 550 if the temperature sensed by a temperature sensor provided in the transmitter exceeds a predetermined reference value (S507).

In the End of Charge phase 550, when the transmitter determines that the receiver has been removed from the charging surface, the transmitter may transition to the Standby state 510 (S509).

In addition, if a temperature measured in the overtemperature state after lapse of a predetermined time drops below a reference value, the transmitter may transition from the End of Charge phase 550 to the Digital Ping phase 520 (S510).

In the Digital Ping phase 520 or the Power Transfer phase 540, the transmitter may transition to the End of Charge phase 550 when an End of Charge (EOC) request is received from the receiver (S508 and S511).

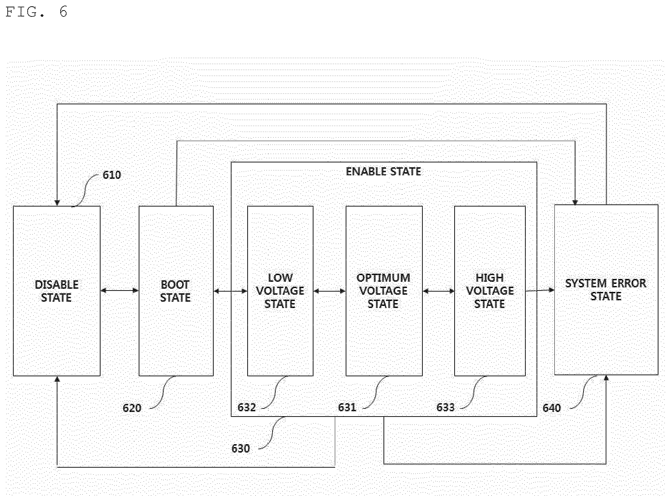

FIG. 6 is a state transition diagram of a wireless power receiver supporting an electromagnetic resonance scheme according to an embodiment.

Referring to FIG. 6, the states of the wireless power receiver may include a disable state 610, a boot state 620, an enable state (or on state) 630 and a system error state 640.

The state of the wireless power receiver may be determined based on the intensity of the output voltage at the rectifier end of the wireless power receiver (hereinafter referred to as V_{RECT} for simplicity) .

The enable state 630 may be divided into an optimum voltage 631, a low voltage state 632 and a high voltage state 633 according to the value of V_{RECT}.

The wireless power receiver in the disable state 610 may transition to the boot state 620 when the measured value of V_{RECT} is greater than or equal to the predefined value of V_{RECT_BOOT}. In the disable state 610, the wireless power receiver may receive a beacon signal, which may be, for example, a long beacon defined in A4WP.

In the boot state 620, the wireless power receiver may establish an out-of-band communication link with a wireless power transmitter by transmitting an advertisement signal and wait until the value of V_{RECT} reaches the power required at a predetermined load stage.

Upon recognizing that the value of V_{RECT} has reached the power required at the load stage, the wireless power receiver in the boot state 620 may transition to the enable state 630 and begin charging.

The wireless power receiver in the enable state 630 may transition to the boot state 620 or the disable state 610 upon recognizing that charging is completed or interrupted.

In addition, the wireless power receiver in the enable state 630 may transition to the system error state 640 when a predetermined system error is detected. Here, the system error may include overvoltage, overcurrent, and overtemperature, as well as other predefined system error conditions.

In addition, the wireless power receiver in the enable state 630 may transition to the disable state 610 if the value of V_{RECT} falls below the value of V_{RECT_BOOT}.

In addition, the wireless power receiver in the boot state 620 or the system error state 640 may transition to the disable state 610 when the value of V_{RECT} falls below the value of V_{RECT_BOOT}.

Hereinafter, state transition of the wireless power receiver in the enable state 630 will be described in detail.

The operation range of the wireless power receiver according to V_{RECT} in the electromagnetic resonance scheme will be described in detail.

When the value of V_{RECT} is less than a predetermined value of V_{RECT_BOOT}, the wireless power receiver is maintained in the disable state 610.

Thereafter, when the value of V_{RECT} is increased beyond V_{RECT_BOOT}, the wireless power receiver may transition to the boot state 620 and broadcast an advertisement signal within a predetermined time. Thereafter, when the advertisement signal is detected by the wireless power transmitter, the wireless power transmitter may transmit a predetermined connection request signal for establishing an out-of-band communication link to the wireless power receiver.

Once the out-of-band communication link is normally established and successfully registered, the wireless power receiver may wait until the value of V_{RECT} reaches the minimum output voltage of the rectifier for normal charging (hereinafter referred to as V_{RECT_MIN} for simplicity).

When the value of V_{RECT} exceeds V_{RECT_MIN}, the wireless power receiver may transition from the boot state 620 to the enable state 630 and may begin charging the load

When the value of V_{RECT} in the enable state 630 exceeds a predetermined reference value V_{RECT_MAX} for determining overvoltage, the wireless power receiver may transition from the enable state 630 to the system error state 640.

Referring to FIG. 6, the enable state 630 may be divided into a low voltage state 632, an optimum voltage state 631 and a high voltage state 633 according to the value of V_{RECT}.

The low voltage state 632 may refer to a state in which V_{RECt_BOOT} <= V_{RECT} <= V_{RECT_MIN}, the optimum voltage state 631 may refer to a state in which V_{RECT_MIN} < V_{RECT} <= V_{RECT_HIGH}, and the high voltage state 633 may refer to a state in which V_{RECT_HIGH} < V_{RECT} <= V_{RECT}__{MAX}.

In particular, the wireless power receiver having transitioned to the high voltage state 633 may suspend the operation of cutting off the power supplied to the load for a predetermined time (hereinafter referred to as a high voltage state maintenance time for simplicity). The high voltage state maintenance time may be predetermined so as not to cause damage to the wireless power receiver and the load in the high voltage state 633.

When the wireless power receiver transitions to the system error state 640, it may transmit a predetermined message indicating occurrence of overvoltage to the wireless power transmitter through the out-of-band communication link within a predetermined time.

The wireless power receiver may also control the voltage applied to the load using an overvoltage interruption means provided to prevent damage to the load due to the overvoltage in the system fault state 630. Here, an ON/OFF switch and/or a Zener diode may be used as the overvoltage interruption means.

Although a method and means for coping with a system error in a wireless power receiver when overvoltage is generated and the wireless power receiver transitions to the system error state 640 have been described in the above embodiment, this is merely an embodiment. In other embodiments, the wireless power receiver may transition to the system error state due to overheating, overcurrent, and the like.

As an example, in the case where the wireless power receiver transitions to the system error state due to overheating, the wireless power receiver may transmit a predetermined message indicating the occurrence of overheating to the wireless power transmitter. In this case, the wireless power receiver may drive a cooling fan or the like to reduce the internally generated heat.

According to another embodiment of the present disclosure, a wireless power receiver may receive wireless power in conjunction with a plurality of wireless power transmitters. In this case, the wireless power receiver may transition to the system error state 640 upon determining that the wireless power transmitter from which the wireless power receiver is determined to actually receive wireless power is different from the wireless power transmitter with which the out-of-band communication link is actually established.

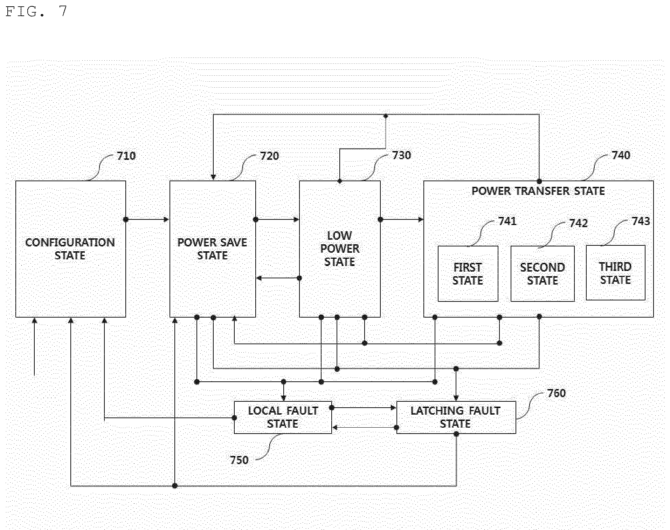

FIG. 7 is a state transition diagram illustrating a state transition procedure in a wireless power transmitter supporting an electromagnetic resonance scheme according to an embodiment.

Referring to FIG. 7, the states of the wireless power transmitter may include a configuration state 710, a power save state 720, a low power state 730, a power transfer state 740, a local fault state 750, and a latching fault state 760.

When power is applied to the wireless power transmitter, the wireless power transmitter may transition to the configuration state 710. The wireless power transmitter may transition to a power save state 720 when a predetermined reset timer expires in the configuration state 710 or the initialization procedure is completed.

In the power save state 720, the wireless power transmitter may generate a beacon sequence and transmit the same through a resonant frequency band.

Here, the wireless power transmitter may control the beacon sequence to be initiated within a predetermined time after entering the power save state 720. For example, the wireless power transmitter may control the beacon sequence to be initiated within 50 ms after transition to the power save state 720. However, embodiments are not limited thereto.

In the power save state 720, the wireless power transmitter may periodically generate and transmit a first beacon sequence for detecting presence of a conductive object in the charged area, and sense a change in impedance of the reception resonator, namely, load variation.

In addition, in the power save state 720, the wireless power transmitter may periodically generate and transmit a predetermined second beacon sequence for identifying the detected object. Here, the transmission timing of the beacon may be determined such that the first beacon sequence and the second beacon sequence do not overlap each other. Hereinafter, for simplicity, the first beacon sequence and the second beacon sequence will be referred to as a short beacon sequence and a long beacon sequence, respectively.

In particular, the short beacon sequence may be repeatedly generated and transmitted at a constant time interval t_{CYCLE} during a short period t_{SHORT_BEACON} until a conductive object is detected in the charging area. For example, t_{SHORT_BEACON} may be set to 30 ms or less, and t_{CYCLE} may be set to 250 ms ± 5 ms. However, embodiments are not limited thereto. In addition, the current intensity of each short beacon included in the short beacon sequence may be greater than a predetermined reference value, and may be gradually increased during a predetermined time period.

The wireless power transmitter according to the present disclosure may be provided with a predetermined sensing means for sensing change in reactance and resistance of the reception resonator according to reception of the short beacon.

In addition, in the power save state 720, the wireless power transmitter may periodically generate and transmit the second beacon sequence. i.e., the long beacon sequence.

That is, the wireless power receiver may broadcast a predetermined response signal to the wireless power transmitter over an out-of-band communication channel when booting is completed through the long beacon sequence.

In particular, the long beacon sequence may be generated and transmitted at a constant time interval t_{LONG_BEACON_PERIOD} during a relatively long period T_{LONG_BEACON} compared to the short beacon sequence to supply sufficient power necessary for booting the wireless power receiver. For example, t_{LONG_BEACON} may be set to 105 ms + 5 ms, and t_{LONG_BEACON_PERIOD} may be set to 850 ms. The current intensity of each long beacon may be stronger than the current intensity of the short beacon. In addition, the long beacon may be maintained at a constant current intensity during the transmission period.

Thereafter, when change in impedance of the reception resonator is detected, the wireless power transmitter may wait to receive a predetermined response signal during the long beacon transmission period. Hereinafter, for simplicity, the response signal will be referred to as an advertisement signal. Here, the wireless power receiver may broadcast the advertisement signal in an out-of-band communication frequency band that is different from the resonant frequency band.

In one example, the advertisement signal may include at least one of or any one of message identification information for identifying a message defined in the out-of-band communication standard, a unique service identification information or wireless power receiver identification information for identifying whether the wireless power receiver is legitimate or compatible with the wireless power transmitter, information about the output power of the wireless power receiver, information about the rated voltage/current applied to the load, antenna gain information about the wireless power receiver, information for identifying the category of the wireless power receiver, wireless power receiver authentication information, information about whether or not the overvoltage protection function is provided, and version information about the software installed on the wireless power receiver.

Upon receiving the advertisement signal, the wireless power transmitter may establish an out-of-band communication link with the wireless power receiver after transitioning from the power save state 720 to the low power state 730. Subsequently, the wireless power transmitter may perform the registration procedure for the wireless power receiver over the established out-of-band communication link. For example, if the out-of-band communication is Bluetooth low-power communication, the wireless power transmitter may perform Bluetooth pairing with the wireless power receiver and exchange at least one of the state information, characteristic information, and control information about each other via the paired Bluetooth link.

When the wireless power transmitter transmits, to the wireless power receiver, a predetermined control signal for initiating charging via out-of-band communication, i.e., a predetermined control signal for requesting that the wireless power receiver transmit power to the load, in the low power state 730, the wireless power transmitter may transition from the low power state 730 to the power transfer state 740.

If the out-of-band communication link establishment procedure or registration procedure is not normally completed in the low power state 730, the wireless power transmitter may transition from the low power state 730 to the power save state 720.

A separate independent link expiration timer by which the wireless power transmitter may connect to each wireless power receiver may be driven, and the wireless power receiver may transmit a predetermined message for announcing its presence to the wireless power transmitter in a predetermined time cycle before the link expiration timer expires. The link expiration timer is reset each time the message is received. If the link expiration timer does not expire, the out-of-band communication link established between the wireless power receiver and the wireless power receiver may be maintained.

If all the link expiration timers corresponding to the out-of-band communication link established between the wireless power transmitter and the at least one wireless power receiver have expired in the low power state 730 or the power transfer state 740, the wireless power transmitter may transition to the power save state 720.

In addition, the wireless power transmitter in the low power state 730 may drive a predetermined registration timer when a valid advertisement signal is received from the wireless power receiver. When the registration timer expires, the wireless power transmitter in the low power state 730 may transition to the power save state 720. At this time, the wireless power transmitter may output a predetermined notification signal announcing that registration has failed through a notification display means (including, for example, an LED lamp, a display screen, and a beeper) provided in the wireless power transmitter.

Further, in the power transfer state 740, when charging of all connected wireless power receivers is completed, the wireless power transmitter may transition to the low power state 730.

In particular, the wireless power receiver may allow registration of a new wireless power receiver in states other than the configuration state 710, the local fault state 750, and the latching fault state 760.

In addition, the wireless power transmitter may dynamically control the transmit power based on the state information received from the wireless power receiver in the power transfer state 740.

Here, the receiver state information transmitted from the wireless power receiver to the wireless power transmitter may include at least one of required power information, information on the voltage and/or current measured at the rear end of the rectifier, charge state information, information indicating the overcurrent, overvoltage and/or overheated state, and information indicating whether or not a means for cutting off or reducing power transferred to the load according to the overcurrent or the overvoltage is activated. The receiver state information may be transmitted with a predetermined periodicity or transmitted every time a specific event is generated. In addition, the means for cutting off or reducing the power transferred to the load according to the overcurrent or overvoltage may be provided using at least one of an ON/OFF switch and a Zener diode.

According to another embodiment, the receiver state information transmitted from the wireless power receiver to the wireless power transmitter may further include at least one of information indicating that an external power source is connected to the wireless power receiver by wire and information indicating that the out-of-band communication scheme has changed (e.g., the communication scheme may change from NFC (Near Field Communication) to BLE (Bluetooth Low Energy) communication).

According to another embodiment of the present disclosure, a wireless power transmitter may adaptively determine the intensity of power to be received by each wireless power receiver based on at least one of the currently available power of the power transmitter, the priority of each wireless power receiver, or the number of connected wireless power receivers. Here, the power intensity of each wireless power receiver may be determined as a share of power to be received with respect to the maximum power that may be processed by the rectifier of the corresponding wireless power receiver. However, embodiments are not limited thereto.

Thereafter, the wireless power transmitter may transmit, to the wireless power receiver, a predetermined power control command including information about the determined power intensity. Then, the wireless power receiver may determine whether power control can be performed based on the power intensity determined by the wireless power transmitter, and transmit the determination result to the wireless power transmitter through a predetermined power control response message.

According to another embodiment of the present disclosure, a wireless power receiver may transmit, to the wireless power transmitter, predetermined receiver state information indicating whether wireless power control can be performed according to a power control command of a wireless power transmitter before receiving the power control command.

The power transfer state 740 may be any one of a first state 741, a second state 742 and a third state 743 according to the power reception state of the connected wireless power receiver.

In one example, the first state 741 may indicate that the power reception state of all wireless power receivers connected to the wireless power transmitter is a normal voltage state.

The second state 742 may indicate that the power reception state of at least one wireless power receiver connected to the wireless power transmitter is the low voltage state and there is no wireless power receiver which is in the high voltage state.

The third state 743 may indicate that the power reception state of at least one wireless power receiver connected to the wireless power transmitter is the high voltage state.

When a system error is detected in the power save state 720, the low power state 730, or the power transfer state 740, the wireless power transmitter may transition to the latching fault state 760.

The wireless power transmitter in the latching fault state 760 may transition to either the configuration state 710 or the power save state 720 upon determining that all connected wireless power receivers have been removed from the charging area.

In addition, when a local fault is detected in the latching fault state 760, the wireless power transmitter may transition to the local fault state 750. Here, the wireless power transmitter in the local fault state 750 may transition back to the latching fault state 760 when the local fault is eliminated.

On the other hand, in the case where the wireless power transmitter transitions from any one state among the configuration state 710, the power save state 720, the low power state 730, and the power transfer state 740 to the local fault state 750, the wireless power transmitter may transition to the configuration state 710 once the local fault is eliminated.

The wireless power transmitter may interrupt the power supplied to the wireless power transmitter once it transitions to the local fault state 750. For example, the wireless power transmitter may transition to the local fault state 750 when a fault such as overvoltage, overcurrent, or overheating is detected. However, embodiments are not limited thereto.

In one example, the wireless power transmitter may transmit, to at least one connected wireless power receiver, a predetermined power control command for reducing the intensity of power received by the wireless power receiver when overcurrent, overvoltage, or overheating is detected.

In another example, the wireless power transmitter may transmit, to at least one connected wireless power receiver, a predetermined control command for stopping charging of the wireless power receiver when overcurrent, overvoltage, or overheating is detected.

Through the above-described power control procedure, the wireless power transmitter may prevent damage to the device due to overvoltage, overcurrent, overheating, or the like.

When the intensity of the output current of the transmission resonator is greater than or equal to a reference value, the wireless power transmitter may transition to the latching fault state 760. The wireless power transmitter that has transitioned to the latching fault state 760 may attempt to make the intensity of the output current of the transmission resonator less than or equal to a reference value for a predetermined time. Here, the attempt may be repeated a predetermined number of times. If the latching fault state 760 is not released despite repeated execution, the wireless power transmitter may send, to the user, a predetermined notification signal indicating that the latching fault state 760 has not been released, using a predetermined notification means. In this case, when all of the wireless power receivers positioned in the charging area of the wireless power transmitter are removed from the charging area by the user, the latching fault state 760 may be released.

On the other hand, if the intensity of the output current of the transmission resonator falls below the reference value within a predetermined time, or if the intensity of the output current of the transmission resonator falls below the reference value during the predetermined repetition, the latching fault state 760 may be automatically released. In this case, the wireless power transmitter may automatically transition from the latching fault state 760 to the power save state 720 to perform the detection and identification procedure for a wireless power receiver again.

The wireless power transmitter in the power transfer state 740 may transmit continuous power and adaptively control the transmit power based on the state information on the wireless power receiver and predefined optimal voltage region setting parameters.

For example, the predefined optimal voltage region setting parameters may include at least one of a parameter for identifying a low voltage region, a parameter for identifying an optimum voltage region, a parameter for identifying a high voltage region, and a parameter for identifying an overvoltage region.

The wireless power transmitter may increase the transmit power if the power reception state of the wireless power receiver is in the low voltage region, and reduce the transmit power if the power reception state is in the high voltage region.

The wireless power transmitter may also control the transmit power to maximize power transmission efficiency.

The wireless power transmitter may also control the transmit power such that the deviation of the amount of power required by the wireless power receiver is less than or equal to a reference value.

In addition, the wireless power transmitter may stop transmitting power when the output voltage of the rectifier of the wireless power receiver reaches a predetermined overvoltage region, namely, when overvoltage is detected.

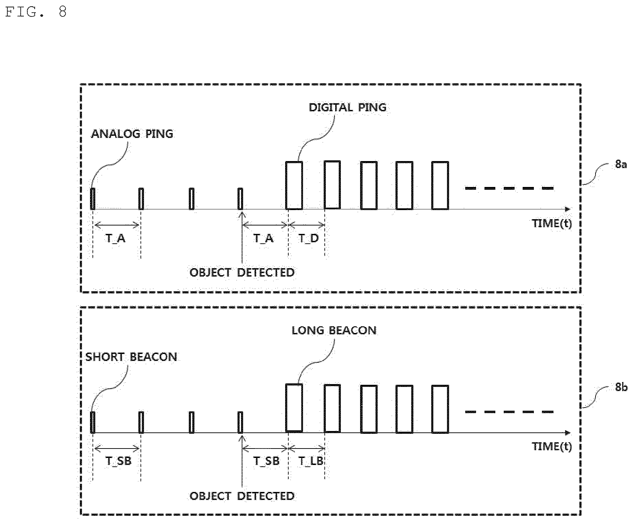

FIG. 8 is a diagram illustrating a conventional method of transmitting a detection signal.

The type of detection signals for detecting presence of an object in the conventional charging area and detecting presence of a receiver depends on the applied wireless power transmission scheme.

For example, a ping signal is used in electromagnetic induction schemes such as PMA and WPC, and a beacon signal is used in electromagnetic resonance scheme such as A4WP.

Referring to a section indicated by 8a in FIG. 8, when power is applied, the conventional wireless power transmission device according to the electromagnetic induction scheme transmits an analog ping signal at intervals of a preset analog ping transmission period T_A.

The wireless power transmission device may monitor change in power of the transmitted analog ping signal, which may be, for example, change in intensity of the current applied to the transmission coil.

If the amount of change in power of the analog ping signal exceeds a predetermined reference value, the wireless power transmission device may detect presence of an object on the charging bed.

Once the wireless power transmission device detects presence of an object on the charging bed, the wireless power transmission device may transmit a digital ping signal at intervals of a predetermined digital ping transmission period T_D. Here, transmission of the digital ping signal may be interrupted when a specific signal, for example, a signal strength indicator defined in the WPC standard, is received from the wireless power receiver.

However, the conventional wireless power transmission device continues to transmit the digital ping signal even when the detected object is a foreign object that cannot be wirelessly charged, that is, when a signal strength indicator corresponding to the digital ping signal is not received from the wireless power reception device.

In this case, unnecessary continuous transmission of the digital ping signal not only causes waste of power at the transmission end, but also causes heat to be generated due to the foreign object, thereby damaging the device.

Referring to a section indicated by 8b in FIG. 8, when power is applied, the conventional wireless power transmission device according to the electromagnetic resonance scheme transmits a short beacon signal at intervals of a predetermined short beacon transmission period T_SB.

The wireless power transmission device may monitor load variance or impedance change according to transmission of the short beacon signal.

When the load variance for the short beacon signal exceeds a predetermined reference value, the wireless power transmission device may detect presence of an object on the charging bed.

Once the wireless power transmission device detects presence of an object on the charging bed, the wireless power transmission device may transmit a long beacon signal at intervals of a predetermined long beacon transmission period T_LB. Here, transmission of the long beacon signal may be interrupted when a specific signal, for example, which may be an advertisement signal (or an advertisement message), is normally received from the wireless power receiver.

However, the conventional wireless power transmission device continues to transmit the long beacon signal even when the detected object is a foreign object that cannot be wirelessly charged, that is, when a signal strength indicator corresponding to the long beacon signal is not received from the wireless power reception device. In this case, the unnecessary continuous transmission of the long beacon signal not only causes waste of power at the transmission end, but also causes heat to be generated due to the foreign object, thereby damaging the device.

Generally, a first signal, including, for example, the analog ping signal and the short beacon signal, transmitted to detect presence of an object in the charging area has a shorter transmission time and lower transmission power than a signal, including, for example, the digital ping signal and the long beacon signal, transmitted to identify the receiver after detection of the object.

For example, the transmission time, that is, the duty cycle, of the analog ping signal according to the WPC standard is about 90 microseconds (µsec), which is significantly different from the transmission time of the digital ping signal, which is 65 milliseconds (msec). Therefore, when a second signal is continuously transmitted after an object is detected, a serious heating phenomenon may occur due to the electromagnetic field absorbed by the foreign object.

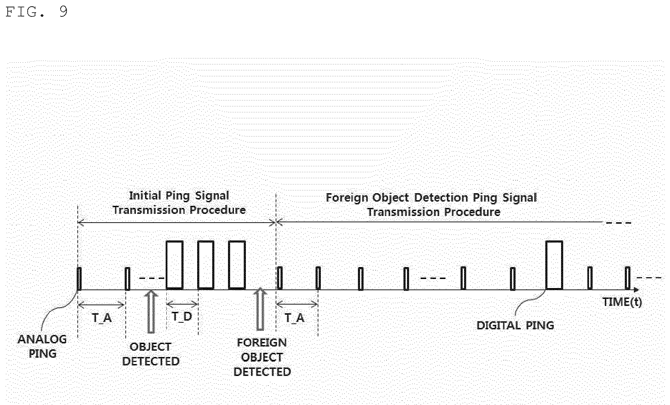

FIG. 9 is a diagram illustrating a method of controlling transmission of a ping signal upon detection of a foreign object according to an embodiment.

Referring to FIG. 9, when power is applied, a wireless power transmission device supporting the electromagnetic induction scheme may perform an initial ping signal transmission procedure.

In the initial ping signal transmission procedure, the wireless power transmission device may transmit the analog ping signal at intervals of a predetermined analog ping transmission period T_A until presence of an object in the charging area is detected.

When an object is detected, the wireless power transmission device may initiate transmission of the digital ping signal. Then, the digital ping signal may be transmitted at intervals of a predetermined digital ping signal transmission period T_D.

The wireless power transmission device may count the number of consecutive transmissions of the digital ping signal during the initial ping signal transmission procedure. When the number of consecutive transmissions of the digital ping signal reaches a predetermined reference value, which may be, but is not limited to, for example, 3, the wireless power transmission device may determine that a foreign object is present in the charging area. That is, when a signal strength indicator corresponding to the digital ping signal is not received a predetermined number of times in series, the wireless power transmission device may detect presence of a foreign object in the charging area.

Upon detecting presence of a foreign object in the charging area, the wireless power transmission device may initiate a predetermined foreign object detection ping signal transmission procedure.

As shown in FIG. 9, when the foreign object detection ping signal transmission procedure is initiated, the wireless power transmission device may stop consecutive transmission of the digital ping signals and transmit the analog ping signal at intervals of a predetermined analog ping transmission period for a predetermined time.

When the number of consecutive transmissions of the analog ping signal reaches a predetermined reference value, which may be, but is not limited to, for example, 30, the wireless power transmission device may transmit one digital ping signal. Here, non-consecutive transmission of the digital ping signal during the foreign object detection ping signal transmission procedure is intended to address an issue of failing to normally identify a normal receiver which is placed in the charging area.

According to another embodiment, it should be noted that the wireless power transmission device may consecutively transmit a plurality of digital ping signals when the number of consecutive transmissions of the analog ping signal reaches a predetermined reference value.

While FIG. 9 illustrates that the transmission period of the analog ping signal in the initial ping signal transmission procedure is equal to the transmission period of the analog ping signal in the foreign object detection ping signal transmission procedure, this is merely an example. It should be noted that the transmission periods may be set to be different from each other. For example, the transmission period of the analog ping signal in the initial ping signal transmission procedure may be set to be shorter than the transmission period of the analog ping signal in the foreign object detection ping signal transmission procedure.

When a foreign object is detected, the wireless power transmission device according to the embodiment of FIG. 9 may interrupt consecutive transmission of the digital ping signals and enter the foreign object detection ping signal transmission procedure, thereby preventing unnecessary waste of power and minimizing heat generated due to the foreign object.

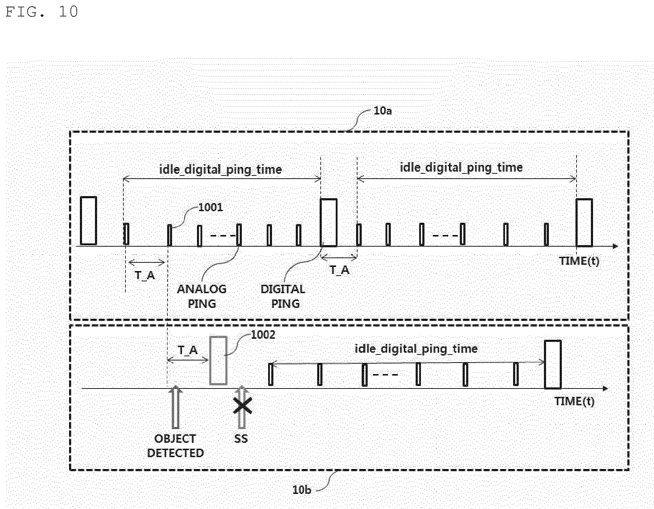

FIG. 10 is a diagram illustrating a method of controlling transmission of a ping signal upon detection of a foreign object according to another embodiment.

Once the foreign object detection ping signal transmission procedure is initiated, the wireless power transmission device according to the embodiment may not transmit the digital ping signal but may transmit only the analog ping signal for the idle digital ping time, as shown in a section indicated by 10a.

The wireless power transmission device may detect an object during the foreign object detection ping signal transmission procedure, as shown in a section indicated by 10b. In this regard, the wireless power transmission device may transmit a digital ping signal 1002 at a time when the analog ping signal transmission period T_A elapses after the last analog ping signal 1001 is transmitted before an object is detected. In the event that a signal strength indicator corresponding to the digital ping signal 1002 is not received, the wireless power transmission device may resume the foreign object detection ping signal transmission procedure.

The idle digital ping time may be set to a fixed time, which may be, but is not limited to, for example, 30 seconds, but this is merely an embodiment. In another embodiment, the idle digital ping time may be increased by a predetermined time, which may be, but is not limited to, for example, 10 seconds, every time the idle digital ping time elapses after the foreign object detection ping signal transmission procedure is initiated.

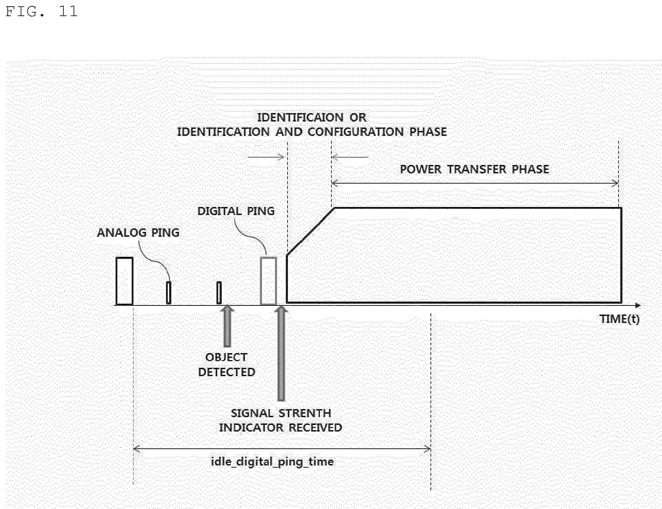

FIG. 11 is a diagram illustrating a wireless power transmission method of a wireless power transmission device supporting an electromagnetic induction scheme according to an embodiment.

Referring to FIG. 11, when an object is detected before the idle digital ping time expires, the wireless power transmission device may stop transmitting the analog ping signal and transmit the digital ping signal.

When the wireless power receiver is booted by the digital ping signal and a signal strength indicator is received, the wireless power transmission device may transition to the power transfer phase via the identification and configuration phase.

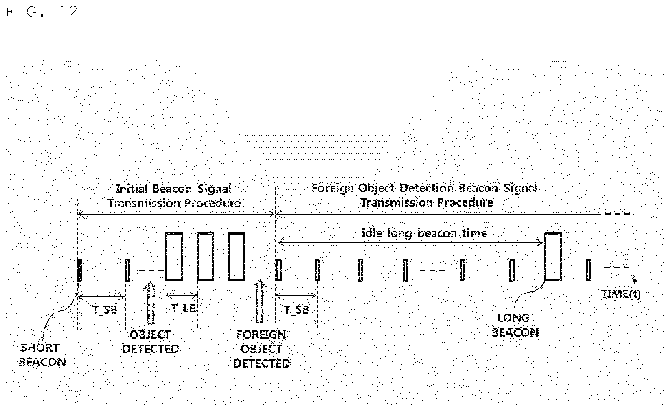

FIG. 12 is a diagram illustrating a method of controlling transmission of a beacon signal upon detection of a foreign object according to an embodiment.

Referring to FIG. 12, when power is applied, a wireless power transmission device supporting the electromagnetic resonance scheme may perform an initial beacon signal transmission procedure. In the initial beacon signal transmission procedure, the wireless power transmission device may transmit the short beacon signal at intervals of a predetermined short beacon transmission period T_SB until presence of an object in the charging area is detected.

When an object is detected, the wireless power transmission device may initiate transmission of the long beacon signal. Then, the long beacon signal may be transmitted at intervals of a predetermined long beacon signal transmission period T_LB.

The wireless power transmission device may count the number of consecutive transmissions of the long beacon signal during the initial beacon signal transmission procedure.

When the number of consecutive transmissions of the digital ping signal reaches a predetermined reference value, which may be, but is not limited to, for example, 3, the wireless power transmission device may determine that a foreign object is present in the charging area. That is, when an advertisement signal corresponding to the long beacon signal is not received a predetermined number of times in series, the wireless power transmission device may detect presence of a foreign object in the charging area.

Upon detecting presence of a foreign object in the charging area, the wireless power transmission device may initiate a predetermined foreign object detection beacon signal transmission procedure.

As shown in FIG. 12, when the foreign object detection beacon signal transmission procedure is initiated, the wireless power transmission device may stop consecutive transmission of the long beacon signals and transmit the short beacon signal at intervals of a short beacon transmission period T_SB for a predetermined idle long beacon time.

When the number of consecutive transmissions of the short beacon signal reaches a predetermined reference value, which may be, but is not limited to, for example, 30, the wireless power transmission device may transmit one long beacon signal.

When the foreign object detection beacon signal transmission procedure is initiated, the wireless power transmission device may drive an idle long beacon timer. The wireless power transmission device may transmit one long beacon signal each time the idle long beacon timer expires and then transmit the short beacon signal during the next idle long beacon time.

Here, non-consecutive transmission of the long beacon signal during the foreign object detection beacon signal transmission procedure is intended to address an issue of failing to normally identify a normal receiver using the short beacon signal alone when the receiver is placed in the charging area.

According to another embodiment, it should be noted that the wireless power transmission device may consecutively transmit the long beacon signal a predetermined number of times when the number of consecutive transmissions of the short beacon signal reaches a predetermined reference value. That is, every time the idle long beacon timer expires, the wireless power transmission device may consecutively transmit the long beacon signal a predetermined number of times and then enter the next idle long beacon time to transmit the short beacon signal.

While FIG. 12 illustrates that the transmission period of the short beacon signal in the initial beacon signal transmission procedure is equal to the transmission period of the short beacon signal in the foreign object detection beacon signal transmission procedure, this is merely an example. It should be noted that the transmission periods may be set to be different from each other. For example, the transmission period of the short beacon signal in the initial beacon signal transmission procedure may be set to be shorter than the transmission period of the short beacon signal in the foreign object detection ping signal transmission procedure.

When a foreign object is detected, the wireless power transmission device according to the embodiment of FIG. 12 may interrupt consecutive transmission of the long beacon signal and enter the foreign object detection ping signal transmission procedure, thereby preventing unnecessary waste of power and minimizing heat generated due to the foreign object.

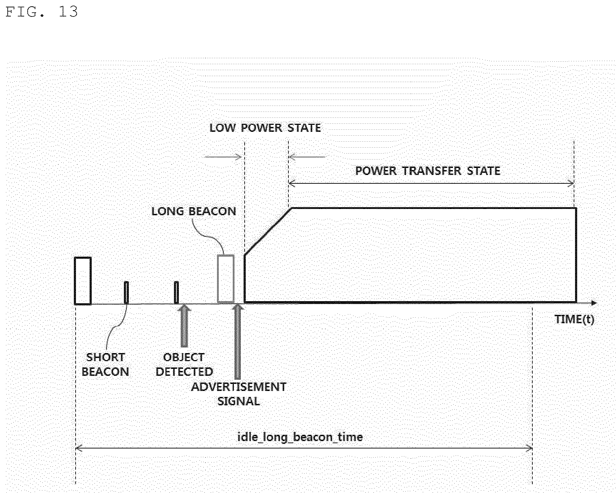

FIG. 13 is a diagram for illustrating a wireless power transmission method of a wireless power transmission device supporting an electromagnetic resonance scheme according to an embodiment.

Referring to FIG. 13, when an object is detected before the idle long beacon timer expires, the wireless power transmission device may immediately stop transmission of the short beacon signal and transmit the long beacon signal for identifying the receiver.

When the wireless power receiver is booted by the long beacon signal and an advertisement signal is received from the wireless power receiver, the wireless power transmitter may identify the wireless power receiver and verify whether the receiver is an appropriate receiver.

When verification is successful, the wireless power transmission device may transition to the power transfer state in which various configuration parameters for power transmission to the wireless power receiver are set.

In the power transfer state, the wireless power transmission device may perform transmit power control based on a predetermined feedback signal received from the wireless power receiver.

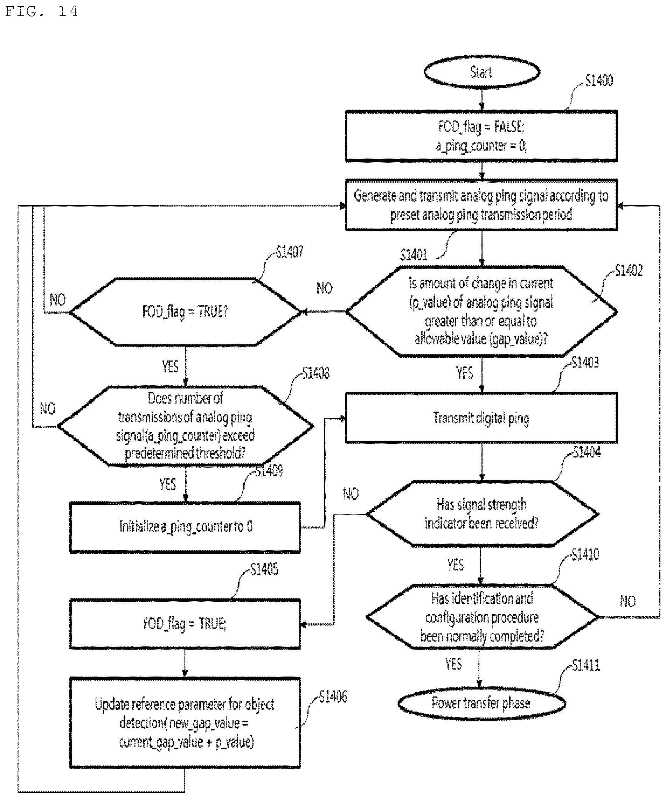

FIG. 14 is a flowchart illustrating a wireless power transmission method for a wireless power transmission device according to an embodiment.

Referring to FIG. 14, when the wireless power transmission device is normally booted after power is applied, it may set a foreign object detection flag FOD_flag to FALSE and initialize the analog ping counter to 0 (S1400).

Here, when the foreign object detection flag is set to FALSE, it may be defined to indicate that no foreign object has been detected. When the foreign object detection flag is set to TRUE, it may be defined to indicate that a foreign object has been detected.

The wireless power transmission device may generate and transmit an analog ping signal according to a preset analog ping transmission period (S1401).

The wireless power transmission device may determine whether a conductive object is present in the charging area by comparing a measured amount of change in current P_value corresponding to the transmitted analog ping signal with a predetermined allowable value gap_value (S1402).

Upon determining that the conductive object is present in the charging area, the wireless power transmission device may transmit the digital ping signal (S1403). On the other hand, upon determining that the conductive object is not present in the charging area, the wireless power transmission device may return to operation 1401 described above.

The wireless power transmission device may check whether a signal strength indicator is received within a predetermined time after transmitting the digital ping signal (S1404).

When the signal strength indicator is normally received as a result of the checking, the wireless power transmission device may perform an identification and configuration procedure to determine whether the wireless power reception device is an appropriate receiver (S1410).

When the receiver is an appropriate wireless power receiver as a result of the determination, the wireless power transmission device may enter the power transfer phase to perform wireless charging of the wireless power receiver.

When the receiver is not an appropriate wireless power receiver as a result of the determination in operation 1410, the wireless power transmission device may enter operation 1401 described above.

When the signal strength indicator is not normally received as a result of checking in operation 1404, the wireless power transmission device may enable the foreign object detection flag FOD_flag, that is, set FOD_flag to TRUE, and update a reference parameter for detecting a conductive object (S1405 to S1406).

Here, the reference parameter to be updated may be a predetermined allowable value that is compared with the amount of change in current of the analog ping signal to determine whether a conductive object is located in the charging area.

For example, when the current allowable value current_gap_value is a and the amount of change in current of the analog fingering signal at the time when FOD_flag is enabled is b, the update allowable value new_gap_value may be determined as the sum of a and b. That is, the allowable value may be updated based on the amount of change in current at the time of determining that an object is present.

Therefore, when a conductive foreign object is placed in the charging area and the amount of current delivered to the transmission coil is increased, a value obtained by adding the increased amount of current to the currently set allowable value may be set to a new allowable value. Thereby, consecutive transmission of the digital ping signal for an object other than the receiver, which causes waste of power and heat generation, may be prevented.

After updating the reference parameter, the wireless power transmission device may return to operation 1401.

When no object is detected according to update of the reference parameter in operation 1406, the wireless power transmission device may check whether the foreign object detection flag FOD_flag is enabled (S1407).

If the foreign object detection flag FOD_flag is enabled as a result of the checking, the wireless power transmission device may increase the analog ping counter a_ping_counter by 1 and then compare the analog ping counter with a predetermined threshold value to determine whether the analog ping counter exceeds the predetermined threshold (S1408).

When the analog ping counter does not exceed the predetermined threshold as a result of the comparison in operation 1408, the wireless power transmission device may return to operation 1401.

On the other hand, when the analog ping counter exceeds the predetermined threshold as a result of the comparison in operation 1408, the wireless power transmission device may initialize the analog ping counter to 0 and enter operation 1403 to generate and transmit a digital ping signal.

That is, the wireless power transmission device according to an embodiment may minimize waste of power and the possibility of heat generation by adaptively controlling the number of transmissions of the digital ping signal for a unit time based on whether or not a foreign object is present.

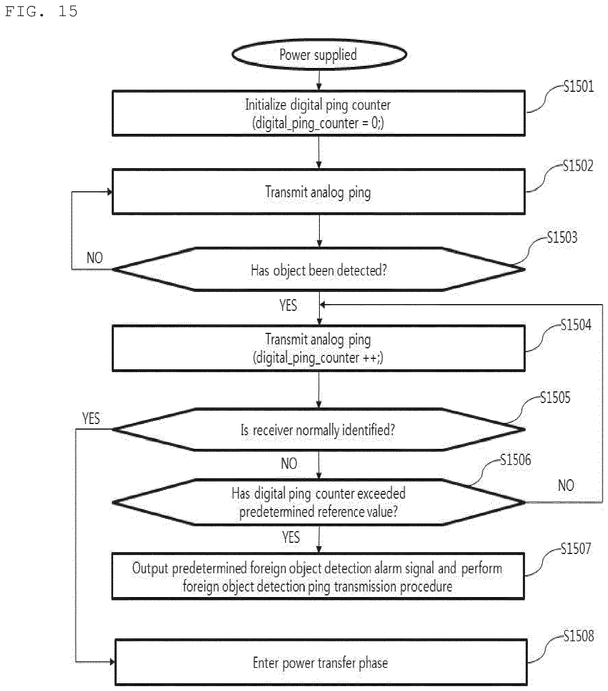

FIG. 15 is a flowchart illustrating a wireless power transmission method for a wireless power transmission device according to another embodiment.

While it is illustrated in the embodiment of FIG. 14 that, when presence of a conductive object in the charging area is detected during the initial ping transmission procedure, it is determined whether or not a foreign object is present based on whether a signal strength indicator for one transmission of the digital ping signal is normally received, this is merely an embodiment.

According to another embodiment, when the number of times the signal strength indicator for consecutive transmissions of the digital signal is not received reaches a predetermined reference value during the initial ping transmission procedure, the wireless power transmission device may determine that a foreign object is present in the charging area.

Referring to FIG. 15, when power is applied and the wireless power transmission device is booted, the wireless power transmission device may initialize the digital ping counter to 0 (S1501).

The wireless power transmission device may transmit the analog ping signal in the standby state or a selection phase at intervals of a predetermined period (S1502).

The wireless power transmission device may check whether a conductive object is present in the charging area (S1503).

Here, whether or not a conductive object is present may be checked by determining whether the amount of change in current applied to the transmission coil during the initial ping transmission procedure exceeds a predetermined allowable value through comparison between the amount and the predetermined allowable value, but embodiments are not limited thereto. When no conductive object is detected, the wireless power transmission device may perform operation 1502 described above.

When the wireless power transmission device detects presence of a conductive object located in the charging area, it may start transmitting the digital ping signal after stopping transmission of the analog ping signal (S1504).

After transmitting the digital ping signal, the wireless power transmission device may identify a receiver based on whether or not a predetermined feedback signal is received (S1505). When the feedback signal is received, the wireless power transmitter may stop transmitting the digital ping signal and enter the identification phase.

When the receiver is not normally identified, that is, when the feedback signal is not normally received, the wireless power transmission device may check whether the digital ping counter has exceeded a predetermined reference value (S1506).

When the digital ping counter has not exceeded the predetermined reference value as a result of checking, the wireless power transmission device may return to operation 1504 to transmit the digital ping signal. In this case, the wireless power transmission device may increase the digital ping counter by 1 every time the wireless power transmission device transmits the digital ping signal.

When the number of consecutive transmissions of the digital ping signal exceeds a predetermined reference value during the initial ping transmission procedure as a result of checking in operation 1506 described above, the wireless power transmission device may output a predetermined foreign object detection alarm signal and perform the foreign object detection ping transmission procedure (S1507). Here, for details of the foreign object detection ping transmission procedure, the description of FIGs. 9 to 14 given above may be referenced.

When the receiver is normally identified in operation 1505, the wireless power transmission device may enter the power transfer phase (S1508).

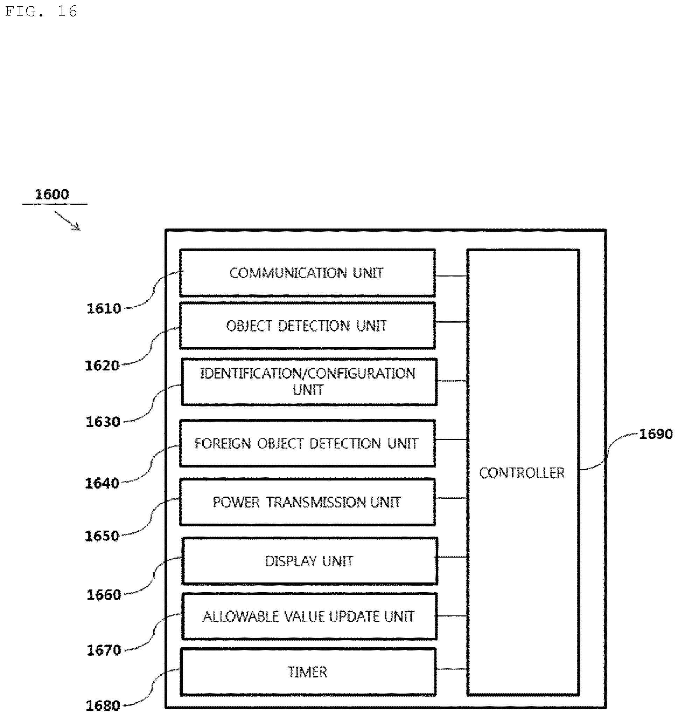

FIG. 16 is a block diagram of a wireless power transmission device according to an embodiment.

Referring to FIG. 16, a wireless power transmission device 1600 may include sub-modules including a communication unit 1610, an object detection unit 1620, a receiver identification unit 1630, an identification/configuration unit 1630, a foreign object detection unit 1640, a power transmission unit 1650, a display unit 1660, an allowable value update unit 1670, and a timer 1680, and a controller 1690 configured to control the overall operation of the sub-modules.

It should be noted that the components of the wireless power transmission device 1600 shown in FIG. 16 are not necessarily essential elements, and that some components can be changed and/or added and/or deleted.

The communication unit 1610 may perform in-band communication or out-of-band communication with a wireless power reception device to transmit/receive various kinds of control signals and state information. Here, the out-of-band communication may include short-range wireless communication such as Bluetooth low-power communication.

In an example, the communication unit 1610 of the wireless power transmission device 1600 supporting the electromagnetic induction scheme may receive a feedback signal such as a signal strength indicator from the wireless power reception device through in-band communication.

In another example, the communication unit 1610 of the wireless power transmission device 1600 supporting the electromagnetic resonance scheme may receive a feedback signal such as an advertisement signal from the wireless power reception device through out-of-band communication.

The object detection unit 1620 may detect whether a conductive object is present in the charging area of the wireless power transmission device 1600.

In an example, the object detection unit 1620 may compare the amount of change in current P_value measured for the analog ping signal transmitted through the power transmission unit 1650 with a predetermined allowable value gap_value to determine whether a conductive object is present in the charging area.

Specifically, when the amount of change in current of the analog ping signal exceeds a predetermined allowable value, the object detection unit 1620 may determine that a conductive object is present in the charging area. The charging area may be configured as a flat charging bed, but is not limited thereto. The charging area may be any area configured to enable wireless charging. The amount of change in current of the analog ping signal may be measured as an amount of change in intensity of the output current of a buck converter that converts a DC voltage supplied from a power source into a predetermined DC voltage, but is not limited thereto. The position for measurement of the amount of change in current may be any position where a change in current is detected as a conductive object is located in the charging area.

The identification/configuration unit 1630 may identify and authenticate the receiver based on various signals received from the wireless power reception device. When authentication is successful, the identification/configuration unit may function to set various configuration parameters for power transmission. In one example, the configuration parameters may be adaptively set based on the category or power rating of the identified receiver, state information about the identified receiver, information about priority assigned to the identified receiver, and the like.

The foreign object detection unit 1640 may determine whether the conductive object detected in the charging area is a foreign object. For example, the foreign object detection unit 1640 may determine whether the detected object is a foreign object based on whether a feedback signal for the digital ping signal or the long beacon signal transmitted after the conductive object is detected is received normally. Upon determining that the detected object is a foreign object, the foreign object detection unit 1640 may transmit, to the controller 1690, a predetermined control signal indicating that the foreign object has been detected.

In an example, when the foreign object is detected, the controller 1690 may control the power transmission unit 1650 to stop transmission of the digital ping signal according to the initial ping signal transmission procedure and to initiate transmission of the ping signal according to the foreign object detection ping signal transmission procedure.

In another example, when the foreign object is detected, the controller 1690 may control the power transmission unit 1650 to stop transmission of the long beacon signal according to the initial beacon signal transmission procedure and to initiate transmission of the beacon signal according to the foreign object detection beacon signal transmission procedure.

The power transmitter 1650 may include, but is not limited to, a frequency generator configured to generate an operating frequency for an AC power signal, and a transmission coil configured to wirelessly transmit an AC signal modulated into the operating frequency.

The power transmission unit 1650 according to an embodiment may include a power conversion unit configured to convert DC power supplied from a power source into specific DC power, which may include, but is not limited to, for example, a DC/DC converter or a buck converter, and a matching circuit configured to match the impedances of the power conversion unit and the transmission resonator in order to maximize power transmission efficiency.

The display unit 1660 may output, through a provided output device, a predetermined alarm signal indicating that a foreign object is present in the charging area according to a predetermined control signal of the controller 1690. Here, the output device may include, but is not limited to, at least one of a beeper, an LED lamp, a buzzer, and a display.

The allowable value update unit 1670 may update a reference parameter for determining whether or not a conductive object is present, that is, an allowable value, upon receiving, from the controller 1690, a predetermined control signal indicating that a foreign object has been detected. Here, for details of the method of updating the allowable value, the description of FIGs. 9 to 14 given above may be referenced.

The timer 1670 may drive the idle digital ping timer at intervals of a predetermined period upon receiving, from the controller 1690, a predetermined control signal indicating that the foreign object detection signal transmission procedure has been initiated. Every time the driven digital ping timer expires, the controller 1690 may control the power transmission unit 1650 to transmit one digital ping signal or a predetermined number of digital ping signals.

In another example, the timer 1670 may drive the idle long beacon timer at intervals of a predetermined period upon receiving, from the controller 1690, a predetermined control signal indicating that the foreign object detection beacon signal transmission procedure has been initiated. Every time the driven digital ping timer expires, the controller 1690 may control the power transmission unit 1650 to transmit one long beacon signal or a predetermined number of long beacon signals.

The wireless power transmission device 1600 according to an embodiment may minimize power waste and prevent heat from being generated, by adaptively controlling the number of transmissions of the digital ping signal or the long beacon signal for a unit time based on whether or not a foreign object is present.

The method according to embodiments of the present disclosure may be implemented as a program to be executed on a computer and stored in a computer-readable recording medium. Examples of the computer-readable recording medium include ROM, RAM, CD-ROM, magnetic tapes, floppy disks, and optical data storage devices, and also include carrier-wave type implementation (e.g., transmission over the Internet).

The computer-readable recording medium may be distributed to a computer system connected over a network, and computer-readable code may be stored and executed thereon in a distributed manner. Functional programs, code, and code segments for implementing the method described above may be easily inferred by programmers in the art to which the embodiments pertain.

It is apparent to those skilled in the art that the present disclosure may be embodied in specific forms other than those set forth herein without departing from the spirit and essential characteristics of the present disclosure.

Therefore, the above embodiments should be construed in all aspects as illustrative and not restrictive. The scope of the disclosure should be determined by the appended claims and their legal equivalents, and all changes coming within the meaning and equivalency range of the appended claims are intended to be embraced therein.

### [Industrial Applicability]

The present invention may be used in the field of wireless charging and is particularly applicable to a wireless power transmission device and a wireless power reception device.

## Claims

1. A method of wirelessly transmitting power by a wireless power transmission device configured to wirelessly transmit power to a wireless power reception device, the method comprising:
transmitting a first detection signal;
measuring an amount of change in current of the first detection signal and determining whether an object is present in a charging area;
transmitting a second detection signal for identifying the wireless power reception device when the object is present as a result of the determining; and
determining whether a foreign object is present based on whether a feedback signal corresponding to the second detection signal is received,
wherein, when it is determined that the foreign object is present, a predetermined allowable value to be compared with the amount of change in current is updated in order to determine whether or not the object is present.

2. The method according to claim 1, wherein, when it is determined that the foreign object is present, the transmission of the second detection signal is stopped and the transmission of the first detection signal is initiated.

3. The method according to claim 2, wherein, with the foreign object being determined to be present, the second detection signal is transmitted every time the number of consecutive transmissions of the first detection signal reaches a predetermined reference value,
wherein, when presence of the object is recognized before the number of consecutive transmissions of the first detection signal reaches the reference value, the second detection signal is transmitted,
wherein, when the feedback signal for the second detection signal is normally received and the wireless power reception device is identified, transmission of the power is initiated.

4. The method according to claim 3, wherein the reference value is increased every time the number of consecutive transmissions of the first detection signal reaches the reference value.

5. The method according to claim 1, wherein, when a scheme for transmitting the power to the wireless power reception device is an electromagnetic resonance scheme, the feedback signal is an advertisement signal defined in Alliance For Wireless Power (A4WP) standard,
wherein, when the scheme for transmitting the power to the wireless power reception device is an electromagnetic inductance scheme, the feedback signal is a control signal strength packet defined in Wireless Power Consortium (WPC) standard.

6. The method according to claim 1, wherein, when the number of consecutive transmissions of the second detection signal exceeds a predetermined reference value without the feedback signal received, it is determined that the foreign object is present, and the allowable value is updated based on the amount of change in current at a time when it is determined that the object is present.

7. The method according to claim 1, wherein, when a scheme for transmitting the power to the wireless power reception device is an electromagnetic resonance scheme, the first detection signal is an analog ping signal and the second detection signal is a digital ping signal,
wherein, when the scheme for transmitting the power to the wireless power reception device is an electromagnetic inductance scheme, the first detection signal is a short beacon signal and the second detection signal is a long beacon signal.

8. A wireless power transmission device for wirelessly transmitting power to a wireless power reception device, the wireless power transmission device comprising:
a power transmission unit configured to transmit a first detection signal;
an object detection unit configured to measure an amount of change in current of the first detection signal and determine whether an object is present in a charging area;
a foreign object detection unit configured to determine, when the object is present, whether or not a foreign object is present based on whether a feedback signal corresponding to a second detection signal transmitted by the power transmission unit to identify the wireless power reception device is received; and
an allowable value update unit configured to update, when it is determined that the foreign object is present, a predetermined allowable to be compared with the amount of change in current in order to determine whether the object is present.

9. The wireless power transmission device according to claim 8, wherein, when it is determined that the foreign object is present, the transmission of the second detection signal is stopped and the transmission of the first detection signal is initiated.

10. The wireless power transmission device according to claim 9, wherein, with the foreign object being determined to be present, the second detection signal is transmitted every time the number of consecutive transmissions of the first detection signal reaches a predetermined reference value,
wherein, when presence of the object is recognized before the number of consecutive transmissions of the first detection signal reaches the reference value, the second detection signal is transmitted,
wherein, when the feedback signal for the second detection signal is normally received and the wireless power reception device is identified, transmission of the power to the wireless power reception device is initiated.

11. The wireless power transmission device according to claim 10, wherein the reference value is increased every time the number of consecutive transmissions of the first detection signal reaches the reference value.

12. The wireless power transmission device according to claim 8, wherein, when a scheme for transmitting the power to the wireless power reception device is an electromagnetic resonance scheme, the feedback signal is an advertisement signal defined in Alliance For Wireless Power (A4WP) standard,
wherein, when the scheme for transmitting the power to the wireless power reception device is an electromagnetic inductance scheme, the feedback signal is a control signal strength packet defined in Wireless Power Consortium (WPC) standard.

13. The wireless power transmission device according to claim 8, wherein, when the number of consecutive transmissions of the second detection signal exceeds a predetermined reference value without the feedback signal received, the foreign object detection unit determines that the foreign object is present, and the allowable value update unit updates the allowable value based on the amount of change in current at a time when it is determined that the object is present.

14. The wireless power transmission device according to claim 8, wherein, when a scheme for transmitting the power to the wireless power reception device is an electromagnetic resonance scheme, the first detection signal is an analog ping signal and the second detection signal is a digital ping signal,
wherein, when the scheme for transmitting the power to the wireless power reception device is an electromagnetic inductance scheme, the first detection signal is a short beacon signal and the second detection signal is a long beacon signal.

15. The wireless power transmission device according to claim 8, wherein the power transmission unit comprises:
a buck converter configured to convert DC power supplied from a power source into specific DC power,
wherein the amount of change in power is measured at an output end of the buck converter.
